(19) Europäisches Patentamt
European Patent Office
Office européen des brevets

(11) **EP 2 570 214 B1**

(12) **EUROPEAN PATENT SPECIFICATION**

(45) Date of publication and mention
of the grant of the patent:
**01.01.2020   Bulletin 2020/01**

(21) Application number: **11780627.3**

(22) Date of filing: **10.05.2011**

(51) Int Cl.:
***B23B 51/04*** *(2006.01)*

(86) International application number:
**PCT/JP2011/060789**

(87) International publication number:
**WO 2011/142370 (17.11.2011 Gazette 2011/46)**

(54) **DEEP-HOLE-BORING DRILL HEAD AND GUIDE PAD THEREFOR**

BOHRKOPF ZUM BOHREN TIEFER LÖCHER UND FÜHRUNGSPOLSTER DAFÜR

TÊTE DE FORAGE PROFOND ET PATIN DE GUIDAGE ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.05.2010   JP 2010108831**

(43) Date of publication of application:
**20.03.2013   Bulletin 2013/12**

(73) Proprietor: **Ayabo Corporation
Anjo-shi, Aichi 446-0045 (JP)**

(72) Inventors:
• **TSUKAMOTO, Keizo
Anjo-shi
Aichi 446-0045 (JP)**

• **FUJII, Katsushi
Anjo-shi
Aichi 446-0045 (JP)**

(74) Representative: **Garavelli, Paolo
A.BRE.MAR. S.R.L.
Consulenza in Proprietà Industriale
Via Servais 27
10146 Torino (IT)**

(56) References cited:
**JP-A- S5 973 215        JP-A- 2005 103 701
JP-A- 2005 103 701     JP-A- 2006 239 826
JP-A- 2006 239 826     JP-A- 2006 239 827
JP-A- 2006 334 749     JP-A- 2008 254 091
US-A- 4 792 264          US-A- 5 551 812
US-A- 5 551 812          US-A- 5 921 727**

**Description**

[Technological Field]

The present invention relates to a deep hole boring drill head (hereafter, which is referred to also simply as "drill head") and to improvement of a guide pad therefor. The present invention relates more specifically to guide pads according to the preambles of claims 1 and 8, as well as to deep hole boring drill heads according to the preamble of claim 4. Such guide pads and deep hole boring drill heads are already known from JP 2005 103701 A.

[Background Art]

Conventionally, various types of deep hole boring drill heads have been proposed in accordance with uses thereof.

As a new use of such the drill head, there is application to a tube seat used in a heat exchanger of a pressurized water atomic power plant.

The tube seat has a structure manufactured by densely boring holes, each of which has a diameter of approximately 18 mm, in a steel member, which has thickness of approximately 800 mm. The drill head is used to form the holes.

High safety is required of the atomic power plant. Therefore, the tube seat is also required to have high reliability and accuracy.

A problem that can occur when boring such the hole having the small diameter (18 mm) and a high aspect ratio L/D (800/18) accurately is a spiral mark. If the spiral mark arises on an inner peripheral surface of the hole of the tube seat, the tube seat cannot be used in the atomic power plant because of hole diameter tolerance and surface roughness.

In order to prevent generation of the spiral mark, an invention described in JP 2006 239827 A improves the shape of a guide pad. US 5 551 812 A and JP S59 73215 A disclose other known guide pads.

[Summary of the Invention]

[Problems to be solved by the Invention]

The inventors of the present invention focused attention on unstable vibration of a boring bar as a cause of generation of the spiral mark. The boring bar is a rod-like member having a leading end, to which the drill head is fixed through an adapter, and having a support end, which is connected to a rotational driving machine. If the aspect ratio L/D of the hole increases, a long boring bar is necessary.

A manufacturing process of the deep hole boring drill head includes a brazing process of a cutting blade and a welding process of a head shank and a thread shank. Therefore, thermal strain tends to occur, and accuracy management is difficult. Moreover, when the boring progresses, the cutting blade and the guide pad are worn away, and a balance therebetween is broken. The variation between the cutting blade and the guide pad caused in such a way is thought to be a cause of generation of the spiral mark.

The inventors of the present invention considered that the rate of progression of the wear of the cutting blade, which receives the largest resistance from the work, is high, that is, durability of the cutting blade is lower than that of the guide pad, which is the primary cause of the loss of the balance between the cutting blade and the guide pad.

Normally, a back taper is provided to a peripheral edge of the cutting blade. A leading end of the cutting blade protrudes outward most and the peripheral edge slants slightly from the leading end side in accordance with the back taper. Therefore, if the leading end side of the cutting blade is worn, the position of the leading end of the cutting blade slightly shifts toward the center by the slant of the back taper. A peripheral edge of the guide pad (which has back taper likewise) is also worn. However, since the rate of the progression of the wear of the cutting blade, which receives the largest resistance from the work, is high, it is thought that the balance between the cutting blade and the guide pad is eventually lost.

Therefore, the inventors thought of providing a wearing margin to the cutting blade and formed a flat land on the leading end peripheral edge of the cutting blade as a trial. The flat land is a flat portion on the leading end side formed on the leading end peripheral edge of the cutting blade (i.e., portion having no back taper). By providing the flat land, reduction of the diameter of the leading end peripheral edge of the cutting blade due to the wear can be prevented. Therefore, the inventors thought that the balance between the cutting blade and the guide pad could be maintained for a longer period.

However, study by the inventors revealed that generation of the spiral mark cannot be prevented by only adding the flat land to the cutting blade for following reason.

It is true that the reduction of the diameter of the cutting blade due to the wear can be prevented by forming the flat land.

However, the wear of the guide pad progresses without change. Therefore, the durability of the guide pad becomes insufficient by an amount of improvement of the durability of the cutting blade. The wear serves as a cause of the loss of the balance between the guide pad and the cutting blade.

[Means for solving the Problems]

The present invention has been made based on the above finding by the present inventors.
The present invention is defined by independent claims 1, 4 and 8. Preferred embodiments are described in dependent claims 2, 3, 5-7 and 9.

A first aspect of the present invention is defined as follows.

That is, a deep hole boring drill head has a head body, a cutting blade, a first guide pad, and a second guide pad. The cutting blade, the first guide pad and the second guide pad are brazed to a leading end peripheral edge of the head body. The first guide pad and the second guide pad are arranged in this order downstream of the cutting blade in a rotational direction of the head body.

A flat land is provided to a leading end peripheral edge of the cutting blade.

A first moving radius from a rotational center of the head body to the leading end peripheral edge of the cutting blade is equal to a third moving radius from the rotational center to a primary guide surface of the second guide pad. A second moving radius from the rotational center of the head body to a primary guide surface of the first guide pad is smaller than the first moving radius.

The flat land is formed in the thus-defined drill head of the first aspect, so a concavo-convex shape formed after the cutting by the cutting blade reduces. Therefore, a force that is required of the primary guide surface of the guide pad to apply to the work for burnishing also reduces.

As a result, a force required of the primary guide surface of the first guide pad, which mainly exerts a burnishing effect, to apply to the work can be reduced. Therefore, the burnishing can be performed sufficiently even if the primary guide surface of the first guide pad is somewhat pulled in, that is, even if the second moving radius from the rotational center of the head body to the primary guide surface of the first guide pad is made shorter than the first moving radius from the rotational center to the leading end peripheral edge of the cutting blade (i.e., flat land). Moreover, the load applied to the primary guide surface of the first guide pad also reduces, and a wearing degree thereof reduces. Thus, sufficient durability of the first guide pad is also ensured. Together with the effect of the cutting blade provided with the flat land for preventing the reduction of the diameter, the balance between the cutting blade and the guide pad can be surely maintained for a long term in the drill head defined as in the first aspect. As a result, the drill head can be used for a long term while preventing generation of the spiral mark, thereby realizing a high throughput.

As an empirical fact, the second guide pad positioned far from the cutting blade is hardly worn away.

[Brief Description of the Drawings]

[Fig. 1] Fig. 1 shows a drill head 1 according to an embodiment of the present invention. Fig. 1(A) is a front view and Fig. 1(B) is a side view.
[Fig. 2] Fig. 2 is a conceptual diagram showing positional relationships among cutting blades 11, 13, 15 and guide pads 21, 23 of the drill head 1 according to an embodiment which does not form part of the present invention.
[Fig. 3] Fig. 3 is a partial enlarged view showing a flat land formed on a leading end peripheral edge 16 of a peripheral blade 11 (cutting blade).
[Fig. 4] Fig. 4 is a conceptual diagram showing reaction forces applied from a work to the cutting blades 11, 13, 15 and the guide pads 21, 23 of the drill head.
[Fig. 5] Fig. 5 is a side view showing a state where the drill head 1 is attached to an adaptor 30.
[Fig. 6] Fig. 6 is a plan view showing a guide pad 121 according to another embodiment of the present invention.
[Fig. 7] Fig. 7 is a side view of the same.
[Fig. 8] Fig. 8 is a cross-sectional view taken along the line VIII-VIII in Fig. 6.
[Fig. 9] Fig. 9 shows a construction of a guide pad piece 200 used in a new manufacturing method of a guide pad.

[Mode for implementing the Invention]

Hereinafter, an embodiment of the present invention will be explained in details with reference to the drawings.

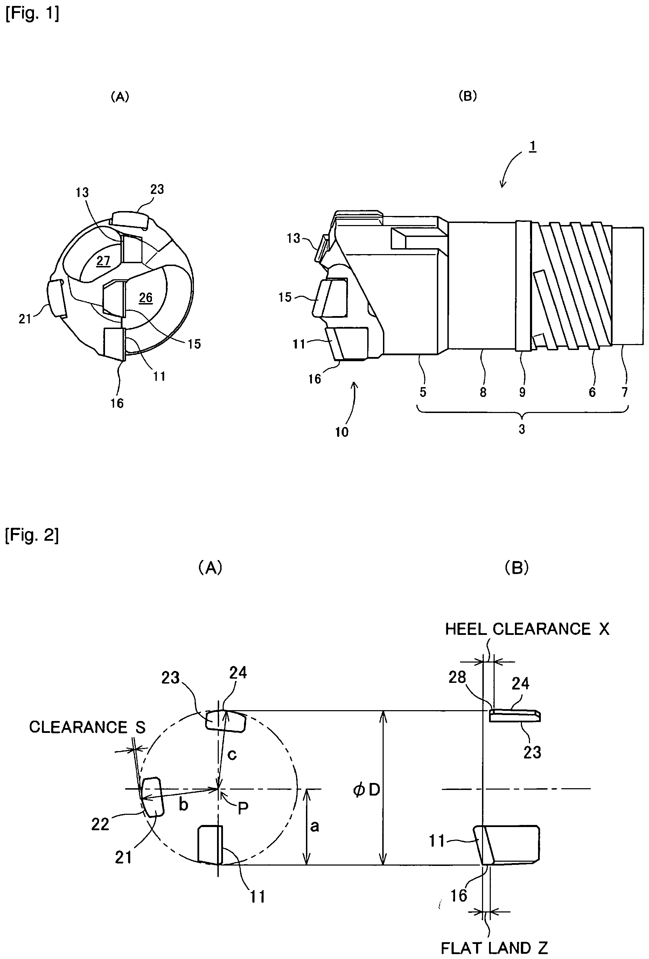

Fig. 1 shows a drill head 1 according to an embodiment of the present invention. Fig. 1(A) is a front view and Fig. 1(B) is a side view.

The drill head 1 has a head body 3, which is formed in a cylindrical shape with multiple steps, and a blade section 10.

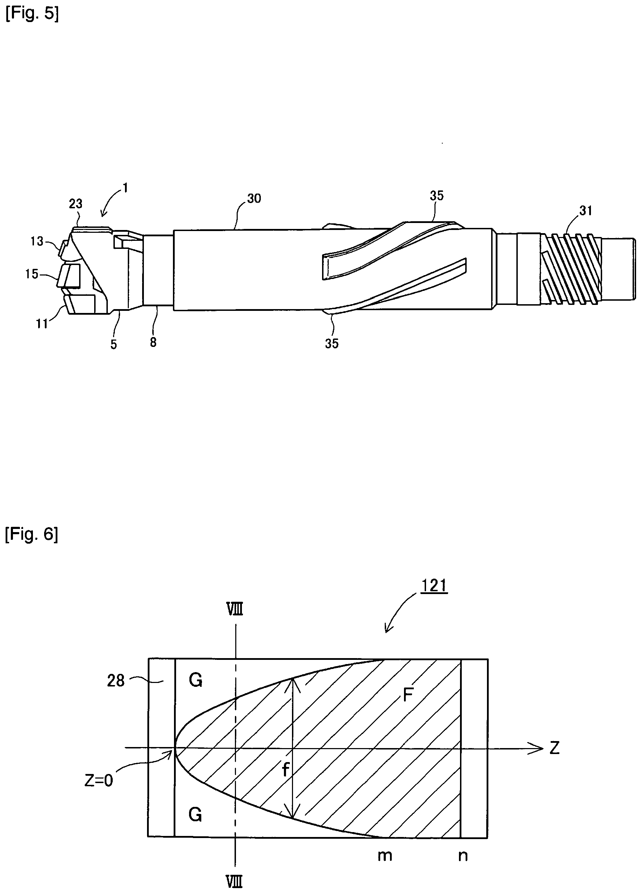

The head body 3 has a head 5 (head shank), to which the blade section 10 is attached, and a thread shank 6 - 9 screwed to an adaptor 30 (refer to Fig. 5). The head 5 and the shank 6 - 9 are welded with each other. The thread shank has three reference cylindrical sections 7 - 9 and a thread section 6.

The blade section 10 is constituted by cutting blades, which are composed of a peripheral blade 11 (cutting blade), an intermediate blade 13 and a central blade 15, and guide pads, which are composed of a first guide pad 21 and a second guide pad 23.

A material of a work is cut with the cutting blades 11, 13, 15. Chips are washed down by lubrication oil into openings 26, 27 formed in a leading end of the head 5. A leading end peripheral edge 16 of the peripheral blade 11 interferes with the material of the work and cuts the material, thereby forming an inner peripheral surface of a hole.

In the present invention, the leading end peripheral edge 16 of the peripheral blade 11 is provided as a flat land.

Fig. 2 schematically shows positional relationships among the peripheral blade 11 and the first and second guide pads 21, 23.

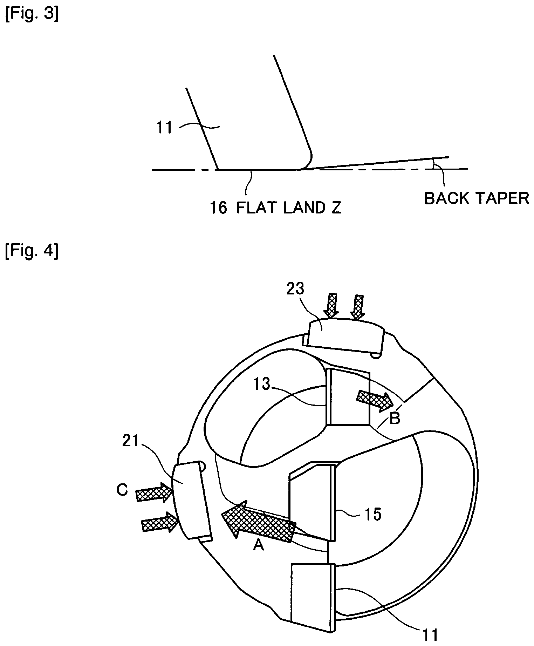

The leading end peripheral edge 16 of the peripheral blade 11 is formed to be flat, i.e., to be parallel to the axis of the drill head, whereby the leading end peripheral edge 16 serves as a flat land (refer to Fig. 3). A back taper is formed on a portion on a root side (right side in Figs. 2 and 3) of the flat land.

Length Z of the flat land is set somewhat smaller than a heel clearance X. In this example, the difference therebetween is 0.2 mm. The difference is not limited specifically but may be selected arbitrarily in a range from 0.1 mm to 0.3 mm.

The heel clearance X is a distance between the leading end of the peripheral edge of the peripheral blade 11 and a leading end of a primary guide surface (i.e., portion that contacts the work) of each of the guide pads 21, 23. If the length Z of the flat land is set equal to or greater than the heel clearance X, it becomes impossible to press the guide pads 21, 23 against an entire area of a step of a hole inner peripheral surface formed by the peripheral blade 11. In such a case, there is a possibility that the burnishing effect is damaged, which is unfavorable.

The first guide pad 21 is arranged at a position posterior to the peripheral blade 11 by approximately 90 degrees on a downstream side in a rotational direction. The second guide pad 23 is positioned posterior to the first guide pad 21 by approximately another 90 degrees (that is, the second guide pad 23 is rotated from the peripheral blade 11 by approximately 180 degrees).

A leading end side of the peripheral edge of the second guide pad 23 is chamfered (as a chamfered section 28). An area of the peripheral edge interfering with the work is the primary guide surface 24.

The first guide pad 21 and the second guide pad 23 have the same shape and are arranged at the same axial position of the drill head 1. Therefore, for simplifying the drawing, only the second guide pad 23 is shown in Fig. 2(B).

Alternatively, the first guide pad 21 and the second guide pad 23 may have different shapes, and/ or the axial positions of the first guide pad 21 and the second guide pad 23 may be differentiated. In that case, the heel clearance is a distance from the leading end of the primary guide surface 22 of the first guide pad 21 to the leading end of the peripheral edge of the peripheral blade 11. It is because the first guide pad 21 mainly exerts the burnishing effect.

As shown in Fig. 2(A), the rotational center P of the drill head 1 is defined by the leading end peripheral edge 16 of the peripheral blade 11 and the primary guide surface 24 of the second guide pad 23. The distance from the rotational center P to the leading end peripheral edge 16 of the peripheral blade 11 (first moving radius (a)) is the same as a distance from the rotational center P to the primary guide surface 24 of the second guide pad (third moving radius (c)). The sum of the first moving radius (a) and the third moving radius (c) is an internal diameter $\phi D$ of the hole of the work.

The moving radius (c) of the primary guide surface 24 of the second guide pad 23 is equal to a radius (D/2) of the inner peripheral surface of the hole at its center and is smaller at its both sides.

The primary guide surface 24 of the second guide pad 23 contacts the inner peripheral surface of the hole formed in the work and mainly stabilizes the position of the peripheral blade 11. A reaction force from the work to the primary guide surface 24 is smaller than a reaction force applied to the first guide pad 23 (refer to Fig. 4). Therefore, the wearing degree of the primary guide surface 24 is relatively small.

In Fig. 4, reaction forces applied from the work to the cutting blades 11, 13, 15 and the guide pads 21, 23 respectively are shown by arrow marks. With the rotation of the drill head 1, the peripheral blade 11 and the central blade 15 interfere with the work first, and a reaction force (A) applied from the work to the peripheral blade 11 and the central blade 15 is the largest. A reaction force (B) applied to the intermediate blade 13 is directed opposite to the reaction force (A). Therefore, the guide pads 21, 23 bear the difference between the reaction forces (A) and (B) as a vector. From the directions of the reaction forces (A) and (B), it is understood that the difference between the reaction forces (A) and (B) acts mainly on the first guide pad 21.

The first guide pad 21 has the same shape as the second guide pad 23. Therefore, the primary guide surface 22 of the first guide pad 21 is equal to the radius (D/2) of the inner peripheral surface of the hole at its center and is smaller at its both sides.

A distance from the primary guide surface 22 of the first guide pad 21 to the rotational center P of the drill head 1 (second moving radius (b)) is smaller than the first moving radius (a) and the third moving radius (c). In this example, the difference therebetween (clearance S) is set from 0.01 to 0.1 mm.

The reaction force is applied from the work as explained with reference to Fig. 4. In addition, the peripheral blade 11 moves in the cutting direction with respect to the work. Therefore, the following first guide pad 23 is pressed hard against the inner peripheral surface of the hole cut and opened by the peripheral blade 11. As a result, its peripheral guide surface 22 exerts the burnishing effect.

In a conventional drill head, the first moving radius (a) is equal to the second moving radius (b). Thus, strong burnishing effect can be exerted by the primary guide surface 22 of the first guide pad 21. In the conventional drill head, no flat land is formed on the leading end peripheral edge of the peripheral blade. Therefore, a small step is formed on the surface cut and opened by the peripheral blade due to the back taper. The strong burnishing effect by the first guide pad 23 erases the step.

In the present invention, the leading end peripheral edge 16 of the peripheral blade 11 is formed as a flat land. Therefore, a step due to the back taper is hardly formed on the surface cut and opened by the peripheral blade 11. Accordingly, the burnishing effect required of the first guide pad 21 is small.

Therefore, as shown in Fig. 2(A), the primary guide surface 22 of the first guide pad 21 is pulled in slightly from a virtual circumference (= inner periphery of hole) defined by the leading end peripheral edge of the peripheral blade 11 and the primary guide surface 24 of the second guide pad 23. That is, following configuration is employed: second moving radius (b) < first moving radius (a) = third moving radius (c).

Thus, the reaction force applied from the work to the primary guide surface 22 of the first guide pad 21 reduces, and the wear thereof is suppressed. Accordingly, the first guide pad 21 exerts necessary burnishing effect and its durability improves.

Thus, durability of both of the peripheral blade 11 and the first guide pad 21 improves. As a result, stability of the balance between the peripheral blade and the guide pad is maintained for a long term. Thus, stable processing time of the drill head 1 lengthens, and boring process time not generating the spiral mark lengthens. As a result, the throughput of the deep hole boring work improves.

The respective cutting blades 11, 13, 15 and the respective guide pads 21, 23 before polishing are brazed to the casted head body 10. Then, precise polishing of the cutting blades 11, 13, 15 and the guide pads 21, 23 is performed using a CNC machine. Thus, the above-explained drill head 1 is manufactured.

Fig. 5 shows a state where the drill head 1 according to the embodiment is assembled to the adaptor 30. A connection 31 of the adaptor 30 is screwed to a leading end section of a boring bar (not shown).

In this example, screws 35 are provided on an outer peripheral surface of the adaptor 30. An outer diameter of the screw 35 is slightly smaller than an outer diameter $\phi D$ of the drill head 1 (difference therebetween is approximately 0.1 mm). With rotation of the adaptor 30, flow velocity of the lubrication oil, which is supplied to the outer periphery of the adaptor 30, toward the drill head 1 is accelerated, whereby the chips can be discharged smoothly. Thus, the durability of the cutting blades 11, 13, 15 and the guide pads 21, 23 improves.

The shape and the number of the screws 35 and the number of stages of the screws 35 may be designed arbitrarily.

The screws 35 also exert a function to stabilize the position of the drill head 1.

Figs. 6 to 8 show an improved first guide pad 121.

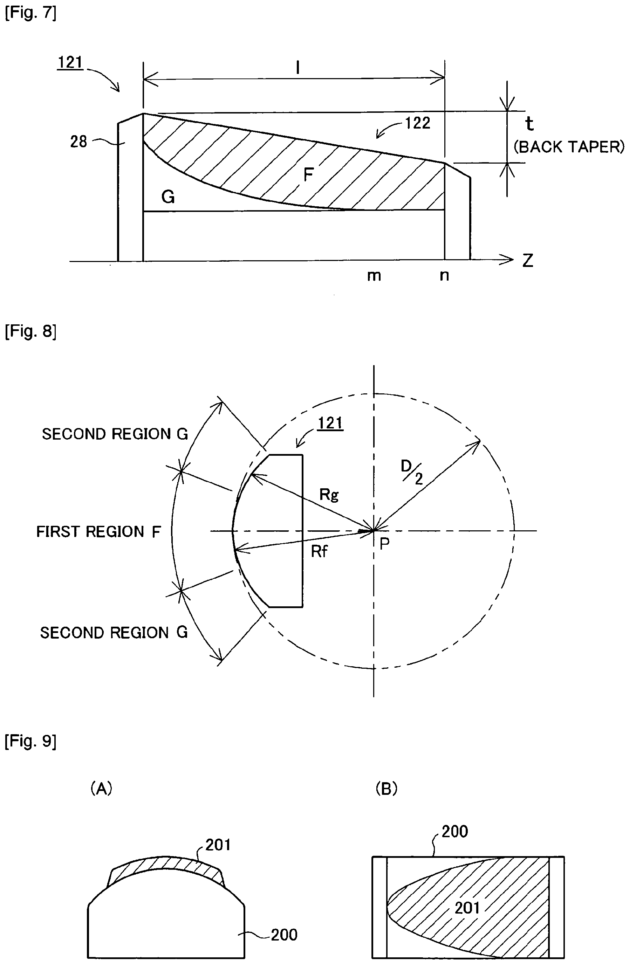

Fig. 6 is a plan view showing the first guide pad 121 from its primary guide surface 122 side. Fig. 7 is a side view of the same. Fig. 8 is a cross-sectional view taken along the line VIII-VIII in Fig. 6. The same components as those shown in Figs. 1 and 2 are denoted with the same signs and the explanation thereof is omitted.

A primary guide surface 122 of the first guide pad 121 has a first region F and a second region G.

A moving radius Rf of the first region F is equal to a radius of the hole (D/2) (= first moving radius (a), third moving radius (c)). The second region G does not interfere with the inner peripheral surface of the hole, and its moving radius Rg is smaller than the radius (D/2).

A back taper is provided to the primary guide surface 122 as shown in Fig. 7. Therefore, the moving radius Rf of the first region F gradually reduces in a Z direction (refer to Figs. 6 and 7, thickness direction of paper in Fig. 8). When the moving radius Rf at the leading end edge is defined as Rf(0) (Z=0 at boundary with chamfered section 28), the moving radius Rf(Z) is represented by Rf(0) - t*Z/l. Alternatively, the moving radius Rf(Z) may be invariably equal to Rf(0).

The moving radius Rg(Z) of the region G is represented as follows.

$$Rg(Z) < Rf(Z) = Rf(0) - t*Z/l$$

A curvature changes continuously at a boundary between the first region F and the second region G, and the both regions F and G are continuous to each other smoothly at the boundary. It is preferable that the curvature changes continuously and is continuous smoothly between the first region F and the second region G, which is not prerequisite.

The first region F of the primary guide surface 121 has a portion, in which width f thereof gradually increases in the Z direction (f(0) < f(Z)) in the plan view. In this example, the width f(0) at the leading end edge (Z = 0) of the primary guide surface 122 is larger than 0. A change rate df(Z)/dZ in the Z direction is larger than 0 (df(Z)/dZ > 0) in a range from Z = 0 to Z = m and is 0 over m to n. Alternatively, in an embodiment not forming part of the invention but representing background art useful for understanding the invention, the change rate df(Z)/dZ may be smaller than 0 (df(Z)/dZ < 0) over m to n.

The value m and the change rate df(Z)/dZ may be selected arbitrarily, and m may be equal to n.

In the example of Fig. 2, in an embodiment not forming part of the invention but representing background art useful for understanding the invention, m = 0.

In the example of Fig. 6, f(Z) is bisected by the central line of the primary guide surface 122 (equal to Z line). In other words, the first region F ranges symmetrically across the central line in the plan view. The primary guide surface 122 is not limited to the shape symmetric across the central line.

With the thus-constructed first guide pad 121, the first region F of the primary guide surface 122 contacts the inner peripheral surface of the hole and performs the burnishing. The width f of the first region F is set narrowly near the central line of the primary guide surface at the leading end edge (Z = 0) of the primary guide surface 122. Therefore, at the start of the boring of the hole, the central portion of the first region F surely contacts the inner peripheral surface of the hole cut and opened by the peripheral blade 11. Thus, relationships of positions and phases between the peripheral blade 11 and the first guide pad 121 coincide with designed relationships. Accordingly, the balance between the peripheral blade 11 and the first guide pad 121 can be maintained easily.

In this way, the portion of the primary guide surface 122 that is brought into contact first is limited to the suitable portion (in this example, its central line portion). Thus, the wear of the primary guide surface 122 accompanying the hole boring process progresses as planned with a higher possibility. Thus, the durability of the first guide pad 122 improves.

In an early stage of the wear immediately after the start of the processing, the phase relationship among the blades tends to become unstable due to the variation in the worn states of the cutting blades and the guide pads. Therefore, by using the guide pad having the above-described construction, in which the initial contacting surface of the guide pad (i.e., portion of first region where Z = 0) is formed narrow, the phases of contacting sections of the guide pad and the inner surface of the processed hole are stabilized. If the initial wear is exceeded, stable processing becomes possible. Therefore, the first region F is widened gradually to secure the durability thereof.

The primary guide surface of the second guide pad can be also improved like the above-described first guide pad. That is, a first region and a second region may be provided to the primary guide surface of the second guide pad. A moving radius Rf of the first region F may be equalized to a radius of the hole (D/2) (= first moving radius (a), third moving radius (c)). A moving radius Rg of the second region G may be set smaller than the radius of the hole (D/2).

Further, the same design concept as the first guide pad can be also applied to a third guide pad disclosed in JP-A-2010-155303.

The guide pad 121 shown in Figs. 6 to 8 can be manufactured by brazing a guide pad before polishing to the head body and then polishing the guide pad with the CNC machine.

Further, as shown in Fig. 9(A), a super-hard material layer 201 composed of metal nitride and the like may be laminated on a surface of a guide pad piece 200 before polishing by a publicly known method such as PVD. At that time, a moving radius of the surface of the guide pad piece 200 is equal to the radius (D/2) of the inner peripheral surface of the hole. Therefore, a moving radius of the surface of the super-hard material layer 201 is also equal to the radius of the inner peripheral surface of the hole. By forming the super-hard material layer 201 in the shape corresponding to the first region F beforehand (refer to Fig. 9(B)), the shape of the first region F can be formed easily and surely. Since the shape of the first region F is stabilized, the durability of the guide pad is also stabilized.

The guide pad shown in Figs. 6 to 9 is suitable to the drill head having the new construction shown in Figs. 1 and 2. Moreover, the guide pad shown in Figs. 6 to 9 can be applied to a general-purpose drill head.

The present invention is not limited to the explanation of the above embodiments and examples of the invention. Various modifications that can be easily conceived by a person having ordinary skills in the art without departing from the scope of the claims are also included in the present invention.

[Description of Reference Numerals]

| | |
|---|---|
| 1 | Drill head |
| 3 | Head body |
| 10 | Blade section |
| 11 | Peripheral blade (cutting blade) |
| 16 | Flat land of leading end peripheral edge |
| 21 | First guide pad |
| 22, 24 | Primary guide surface |
| 23 | Second guide pad |
| 30 | Adaptor |

**Claims**

1. A guide pad designed for being brazed to a leading end peripheral edge of a head body (3) of a deep hole boring drill head (1), comprising:

   a primary guide surface (22, 24) provided with a first region, which has a first radius equal to a radius (D/2) of an inner peripheral surface of a hole to be bored, and a second region, wherein the first region widens from a leading end edge toward a back end side of the primary guide surface (22, 24),
   **characterized in that**:
   the second region has a moving radius smaller than the first radius, and a super-hard material layer is laminated on the primary guide surface (22, 24), and the first region is defined by the super-hard material layer.

2. The guide pad according to claim 1, wherein the first region ranges symmetrically across a central line of the primary guide surface (22, 24) in a plan view of the primary guide surface (22, 24).

3. A deep hole boring drill head (1) having the guide pad according to claim 1 or 2.

4. A deep hole boring drill head (1) comprising:

   a head body (3);
   a cutting blade (11);
   a first guide pad (21); and
   a second guide pad (23), wherein
   the cutting blade (11), the first guide pad (21)

and the second guide pad (23) are brazed to a leading end peripheral edge of the head body (3),

the first guide pad (21) and the second guide pad (23) are arranged in this order downstream of the cutting blade (11) in a rotational direction of the head body (3),

the primary guide surface (22, 24) of each of the first guide pad (21) and the second guide pad (23) is provided with a first region, which has a first radius equal to a radius (D/2) of an inner peripheral surface of a hole to be bored, and a second region, and

the first region widens from a leading end edge toward a back end side of the primary guide surface (22, 24),

**characterized in that**

a flat land (16) is provided to a leading end peripheral edge of the cutting blade (11),

a first moving radius from a rotational center of the head body (3) to the leading end peripheral edge of the cutting blade (11) is equal to a third moving radius from the rotational center to a primary guide surface (24) of the second guide pad (23),

a second moving radius from the rotational center of the head body (3) to a primary guide surface (22) of the first guide pad (21) is smaller than the first moving radius, and

the second region has a moving radius smaller than the first radius.

5. The deep hole boring drill head (1) according to claim 4, wherein
the flat land (16) of the cutting blade (11) is shorter than a heel clearance by 0.1 to 0.3 mm, and
a difference between the first moving radius and the second moving radius is 0.01 to 0.1 mm.

6. The deep hole boring drill head (1) according to claim 4, wherein
the first region ranges symmetrically across a central line of the primary guide surface (22, 24) in a plan view of the primary guide surface (22, 24).

7. The deep hole boring drill head (1) according to claim 4, wherein
a super-hard material layer is laminated on the primary guide surface (22 24), and
the first region is defined by the super-hard material layer.

8. A guide pad designed for being brazed to a leading end peripheral edge of a head body (3) of a deep hole boring drill head (1), comprising:

a primary guide surface (22, 24) provided with a first region, which has a first radius equal to a radius (D/2) of an inner peripheral surface of a hole to be bored, and a second region, wherein the first region widens from a leading end edge toward a back end side of the primary guide surface (22, 24),

**characterized in that**:

the second region has a moving radius smaller than the first radius, and
the radius of the first region shortens gradually from the leading end edge toward the back end side of the primary guide surface (22, 24).

9. The guide pad according to claim 8, wherein the first region ranges symmetrically across a central line of the primary guide surface (22, 24) in a plan view of the primary guide surface (22, 24).

**Patentansprüche**

1. Führungsdorn, der entwickelt wurde, um an einen vorderen abschließenden Umfangsrand eines Kopfaufbaus (3) eines Bohrkopfes (1) für die Bohrung von tiefen Löchern gelötet zu werden, der Folgendes enthält:

eine primäre Führungsfläche (22, 24), die mit einem ersten Bereich ausgestattet ist, der einen ersten Radius hat, der einem Radius (D/2) einer inneren Umfangsfläche eines zu bohrenden Loches entspricht, und einen zweiten Bereich, in dem
sich der erste Bereich von einem vorderen abschließenden Rand zu einer hinteren abschließenden Seite der primären Führungsfläche (22, 24) ausdehnt,
und **dadurch gekennzeichnet ist, dass**:

der zweite Bereich einen kleineren Bewegungsradius hat als der erste Radius, und dass die primäre Führungsfläche (22, 24) mit einer superharten Materialschicht beschichtet ist, und
dass der erste Bereich durch die superharte Materialschicht definiert wird.

2. Führungsdorn gemäß Patentanspruch 1, in dem der erste Bereich der primären Führungsfläche (22, 24) in einer Ansicht von oben der primären Führungsfläche (22, 24) durch eine Mittellinie symmetrisch variiert.

3. Bohrkopf (1) für die Bohrung von tiefen Löchern, der den Führungsdorn gemäß Patentanspruch 1 oder 2 enthält.

**4.** Bohrkopf (1) für die Bohrung von tiefen Löchern, der Folgendes enthält:

einen Kopfaufbau (3);
ein Sägeblatt (11);
einen ersten Führungsdorn (21); und
einen zweiten Führungsdorn (23), in dem
das Sägeblatt (11), der erste Führungsdorn (21) und der zweite Führungsdorn (23) an einen vorderen abschließenden Umfangsrand des Kopfaufbaus (3) gelötet sind,
der erste Führungsdorn (21) und der zweite Führungsdorn (23) in dieser Reihenfolge unterhalb des Sägeblatts (11) in Richtung der Drehung des Kopfaufbaus (3) angeordnet sind,
die primäre Führungsfläche (22) zwischen dem entsprechenden ersten Führungsdorn (21) und dem zweiten Führungsdorn (23) mit einem ersten Bereich ausgestattet ist, der einen ersten Radius hat, der einem Radius (D/2) einer inneren Umfangsfläche eines zu durchbohrenden Loches entspricht, und
der erste Bereich sich von einem vorderen abschließenden Rand zu einer hinteren abschließenden Seite der primären Führungsfläche (22, 24) ausdehnt,
und **dadurch gekennzeichnet ist, dass**;
eine Flachstange (16) an einem vorderen abschließenden Umfangsrand des Sägeblatts (11) vorgesehen ist,
ein erster Bewegungsradius aus einem Rotationszentrum des Kopfaufbaus (3) am vorderen abschließenden Umfangsrand des Sägeblatts (11) einem dritten Bewegungsradius aus dem Rotationszentrum an einer primären Führungsfläche (24) des zweiten Führungsdorns (23) entspricht,
ein zweiter Bewegungsradius aus dem Rotationszentrum des Kopfaufbaus (3) an einer primären Führungsfläche (22) des ersten Führungsdorns (21) kleiner als der erste Bewegungsradius ist, und
der zweite Bereich einen kleineren Bewegungsradius als der erste Radius hat.

**5.** Bohrkopf (1) für die Bohrung von tiefen Löchern gemäß Patentanspruch 4, in dem
die Flachstange (16) des Sägeblatts (11) kürzer als ein Absatzabstand von 0,1 bis 0,3 mm ist, und
der Unterschied zwischen dem ersten Bewegungsradius und dem zweiten Bewegungsradius von 0,01 bis 0,1 mm variiert.

**6.** Bohrkopf (1) für die Bohrung von tiefen Löchern gemäß Patentanspruch 4, in dem
der erste Bereich der primären Führungsfläche (22, 24) in einer Ansicht von oben der primären Führungsfläche (22, 24) durch eine Mittellinie symmetrisch variiert.

**7.** Bohrkopf (1) für die Bohrung von tiefen Löchern gemäß Patentanspruch 4, in dem
eine superharte Materialschicht an der primären Führungsfläche (22, 24) gelötet ist, und
der erste Bereich durch die superharte Materialschicht definiert wird.

**8.** Führungsdorn, der entwickelt wurde, um an einen vorderen abschließenden Umfangsrand eines Kopfaufbaus (3) eines Bohrkopfes (1) für die Bohrung von tiefen Löchern gelötet zu werden, der Folgendes enthält:

eine primäre Führungsfläche (22, 24), die mit einem ersten Bereich ausgestattet ist, der einen ersten Radius hat, der einem Radius (D/2) einer inneren Umfangsfläche eines zu bohrenden Loches entspricht, und einen zweiten Bereich, in dem
sich der erste Bereich von einem vorderen abschließenden Rand zu einer hinteren abschließenden Seite der primären Führungsfläche (22, 24) ausdehnt,
und **dadurch gekennzeichnet ist, dass**:

der zweite Bereich einen kleineren Bewegungsradius als der erste Radius hat, und
sich der Radius des ersten Bereiches stufenweise vom vorderen abschließenden Rand zur hinteren abschließenden Seite der primären Führungsfläche (22, 24) ausdehnt.

**9.** Führungsdorn gemäß Patentanspruch 8, in dem
der erste Bereich der primären Führungsfläche (22, 24) in einer Ansicht von oben der primären Führungsfläche (22, 24) durch eine Mittellinie symmetrisch variiert.

**Revendications**

**1.** Tampon de guidage conçu pour être brasé sur une bordure périphérique d'extrémité avant d'un corps de tête (3) d'une tête de perforation (1) pour le perçage de trous profonds, comprenant :

sur une surface de guidage primaire (22, 24) dotée d'une première région, qui a un premier rayon égal à un rayon (D/2) d'une surface périphérique interne d'un trou à percer, et une seconde région, où
la première région s'élargit depuis une bordure d'extrémité avant vers un côté d'extrémité arrière de la surface de guidage primaire (22, 24),
**caractérisé en ce que** :

la seconde région a un rayon de mouvement inférieur au premier rayon et une couche de matériau super dure qui est laminée sur la surface de guidage primaire (22, 24), et

la première région est définie par la couche de matériau super dure.

2. Tampon de guidage selon la revendication 1, où la première région varie de façon symétrique à travers une ligne médiane de la surface de guidage primaire (22, 24) dans une vue en plan de la surface de guidage primaire (22, 24).

3. Tête de perforation (1) pour le perçage de trous profonds dont le tampon de guidage répond à la revendication 1 ou 2.

4. Tête de perforation (1) pour le perçage de trous profonds comprenant :

un corps de tête (3) ;
une lame de coupe (11) ;
un premier tampon de guidage (21) ; et
un second tampon de guidage (23) ; où
la lame de coupe (11), le premier tampon de guidage (21) et le second tampon de guidage (23) sont brasé sur une bordure périphérique d'extrémité avant du corps de tête (3),
le premier tampon de guidage (21) et le second tampon de guidage (23) sont positionnés dans cet ordre en aval de la lame de coupe (11) dans la direction de rotation du corps de tête (3),
la surface de guidage primaire (22, 24) du premier tampon de guidage (21) et du second tampon de guidage (23) est dotée d'une première région, qui a un premier rayon égal à un rayon (D/2) d'une surface périphérique interne d'un trou à perforer, et
la première région s'élargit depuis une bordure d'extrémité avant vers un côté d'extrémité arrière de la surface de guidage primaire (22, 24),
**caractérisée en ce que** :

un plein plat (16) est prévu sur une bordure périphérique d'extrémité avant de la lame de coupe (11),
un premier rayon de mouvement depuis un centre de rotation du corps de tête (3) vers le bord périphérique d'extrémité avant de la lame de coupe (11) est égal à un troisième rayon de mouvement depuis le centre de rotation vers une surface de guidage primaire (24) du second tampon de guidage (23),
un deuxième rayon de mouvement depuis le centre de rotation du corps de tête (3) vers une surface de guidage primaire (22) du premier tampon de guidage (21) est inférieur au premier rayon de mouvement, et la seconde région a un mouvement qui est inférieur au premier rayon.

5. Tête de perforation (1) pour le perçage de trous profonds selon la revendication 4, où
le plein plat (16) de la lame de coupe (11) est plus court d'un talon de 0,1 à 0,3 mm, et
la différence entre le premier rayon de mouvement et le deuxième rayon de mouvement varie de 0,01 à 0,1 mm.

6. Tête de perforation (1) pour le perçage de trous profonds selon la revendication 4, où.
la première région varie de façon symétrique à travers une ligne médiane de la surface de guidage primaire (22, 24) dans une vue en plan de la surface de guidage primaire (22, 24).

7. Tête de perforation (1) pour le perçage de trous profonds selon la revendication 4, où
une couche de matériau super dure est laminée sur la surface de guidage primaire (22, 24), et
la première région est définie par la couche de matériau super dure.

8. Tampon de guidage conçu pour être brasé sur une bordure périphérique d'extrémité avant d'un corps de tête (3) d'une tête de perforation (1) pour le perçage de trous profonds, comprenant :

sur une surface de guidage primaire (22, 24) dotée d'une première région, qui a un premier rayon égal à un rayon (D/2) d'une surface périphérique interne d'un trou à percer, et une seconde région, où
la première région s'élargit depuis une bordure d'extrémité avant vers un côté d'extrémité arrière de la surface de guidage primaire (22, 24),
**caractérisé en ce que** :

la seconde région a un rayon de mouvement qui est inférieur au premier rayon, et
le rayon de la première région se raccourcit graduellement depuis la bordure d'extrémité avant vers un côté d'extrémité arrière de la surface de guidage primaire (22, 24).

9. Tampon de guidage selon la revendication 8, où
la première région varie de façon symétrique à travers une ligne médiane de la surface de guidage primaire (22, 24) dans une vue en plan de la surface de guidage primaire (22, 24).

[Fig. 1]

(A)                                              (B)

[Fig. 2]

(A)                              (B)

HEEL CLEARANCE X

CLEARANCE S

FLAT LAND Z

[Fig. 3]

11

16 FLAT LAND Z                    BACK TAPER

[Fig. 4]

23

13

B

21

C

15

A

11

[Fig. 5]

[Fig. 6]

[Fig. 7]

121

l

28

122

t
(BACK TAPER)

F

G

m    n

Z

[Fig. 8]

SECOND REGION G

121

D/2

FIRST REGION F

Rg

Rf

P

SECOND REGION G

[Fig. 9]

(A)

(B)

201

200

200

201

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005103701 A
- JP 2006239827 A
- US 5551812 A
- JP S5973215 A
- JP 2010155303 A